# EUROPEAN PATENT APPLICATION

(11) **EP 4 285 735 A1**
(43) Date of publication of application: **06.12.2023**
(21) Application number: 22382539.9
(22) Date of filing: 03.06.2022
(51) Int. Cl.: A23K 20/105, A23K 50/10, A23K 50/15, A23K 10/30, A23K 10/37, A23K 20/111, A23K 20/137, A23K 20/22, A23K 20/24

(54) **USE OF A MIXTURE OF UREA, BIURET AND MINOR N-CONTAINING COMPOUNDS CREATED DURING BIURET PROUCTION AS A DIETARY NPN-SOURCE IN A RUMINANT FEED SUPPLEMENT COMPOSITION**

(71) Applicant: Yara International ASA, 0277 Oslo (NO)
(72) Inventor: RUIZ, Isabel, E-28806 Alcalá de Henares, Madrid (ES); MARTÍNEZ-LUENGAS, Inés, E-28223 Pozuelo de Alarcón, Madrid (ES); PIRRO, Laura, NL-4541 HJ Terneuzen (NL); VAN BELZEN, Ruud, NL-4541 HJ Terneuzen (NL); MOHAN, Anand, NL-4541 HJ Terneuzen (NL); IPHARRAGUERRE, Ignacio R., E-08461 Sant Esteve de Palautordera, Barcelona (ES)
(74) Representative: ABG Intellectual Property Law, S.L.

(57) **Abstract**

The present disclosure relates to the use of a mixture of urea, biuret and minor N-containing compounds created during the urea condensation process to obtain the biuret as a NPN-source in a ruminant feed supplement composition to decrease the acetate to propionate ratio produced by rumen microbes in a ruminant, to improve the EMPS, and/or to increase the DM and OM digestibility.

## Description

### Technical field

The present disclosure relates to the field of dietary non-protein nitrogen (NPN)-sources, more in particular a mixture of urea, biuret and N-containing by-products or minor N-containing compounds created during the urea condensation process, in a ruminant feed supplement.

### Background

Non-protein nitrogen (NPN), mainly in the form of urea, is known as a cost-effective source of supplemental nitrogen (N) in ruminant production. The use of NPN, however, has been traditionally limited by the fast rate of N-release in the rumen of a ruminant (animal) in the form of ammonia. If the release of ammonia in the rumen exceeds the use capacity by ruminal microbiota, this N-excess will be excreted, with a consequent loss of energy and N-efficiency. Furthermore, if the ammonia concentration overpasses the liver excretion capacity of the ruminant, ammonia toxicity or death may occur.

As a result, in the prior art, it has been aimed at improving the use of NPN to reduce the rate of N-release in the rumen mainly by physical means such as applying a coating. Applying a coating with the aim to obtain slow release means adding fat, wax or the like to the NPN-source. This has the disadvantage that the NPN-content is diluted. A coating furthermore increases the production cost of a dietary N-source in cattle diets that should be cost effective.

Another solution is to apply chemical means such as using pure biuret. The disadvantage of pure biuret is that the production thereof is very expensive, because the heating time to obtain the pure biuret out of urea has to be extended a lot.

It is consequently a goal of the present disclosure to provide in a NPN-source for a ruminant feed supplement composition which overcomes the limitations of the known prior art and which provides N in a timely manner such that the microbial growth in the rumen is enhanced and the production of energy yielding compounds is improved.

### Summary

According to a first aspect of the present disclosure, the use of a mixture of biuret, urea and minor N-containing compounds created during the urea condensation process as a NPN-source in a ruminant feed supplement composition to decrease the acetate to propionate ratio produced by rumen microbes in a ruminant has been disclosed. Stated differently, the use of a composition comprising biuret, urea and N-containing by-products of the biuret production out of urea as a NPN-source in a ruminant feed supplement composition to decrease the acetate to propionate ratio produced by rumen microbes in a ruminant is disclosed.

According to a second aspect of the present disclosure, the use of a mixture of biuret, urea and minor N-containing compounds created during the urea condensation process as a NPN-source in a ruminant feed supplement composition to improve the efficiency of microbial protein synthesis (EMPS) has been disclosed. Stated differently, the use of a composition comprising biuret, urea and N-containing by-product of the biuret production out of urea as a NPN-source in a ruminant feed supplement composition to improve the efficiency of microbial protein synthesis (EMPS) is disclosed.

According to a third aspect of the present disclosure, the use of a mixture of biuret, urea and minor N-containing compounds created during the urea condensation process as a NPN-source in a ruminant feed supplement composition to increase the dry matter (DM) and organic matter (OM) digestibility has been disclosed. Stated differently, the use of a composition comprising biuret, urea and N-containing by-products of the biuret production out of urea as a NPN-source in a ruminant feed supplement composition to increase the dry matter (DM) and organic matter (OM) digestibility is disclosed.

It has now unexpectedly been discovered by the applicant that by using a combination of urea, biuret and minor N-containing compounds created during the urea condensation process to form the biuret (also referred to as by-products of the biuret production based on urea), the rumen fermentation is altered directly in a way that the acetate to propionate ratio is decreased, as well as that the efficiency of microbial protein synthesis is improved. It has furthermore been found that the DM and OM digestibility is increased.

According to a possible use according to the present disclosure, the mixture comprises between 30 - 60 wt.% of urea and between 30 and 60 wt.% biuret.

More in particular, the mixture comprises between 37 and 52 wt.% of urea and between 39 and 46 wt.% of biuret.

According to an optional use according to the present disclosure, the mixture further comprises
- between 3 and 6 wt.% of triuret, and/or
- between 0.5 and 3 wt.% of ammelide, and/or
- between 3 and 10 wt.% of cyanuric acid, and
- between 0.1 and 1.5 wt.% of moisture.

Another aspect of the present disclosure provides a ruminant feed composition comprising one or more nutritional ingredients and an NPN composition comprising biuret, urea and N-containing by-products of the biuret production out of urea. In certain embodiments, the NPN composition comprises (a) between 30 and 60 wt.% of urea; (b) between 30 and 60 wt.% of biuret; and (c) between 5 wt.% and 30 wt.% of N-containing by-products of the biuret production out of urea, based on the total weight of the NPN composition. More in particular, the NPN composition comprises (a) between 37 and 52 wt.% of urea; (b) between 39 and 46 wt.% of biuret; (c) between 3 wt.% and 6 wt.% of triuret; (d) between 0.5 and 3 wt.% of ammelide; and (e) between 3 and 10 wt.% of cyanuric acid, based on the total weight of the NPN composition. In certain embodiments, the one or more nutritional ingredients form a nutritionally balanced ration or a basal ration for a ruminant.

Optionally, the ruminant feed composition comprising the NPN composition according to the present disclosure may further comprise one or more nitrate compounds, particularly a water-soluble nitrate salt, more in particular a water-soluble salt chosen from calcium nitrate, magnesium nitrate, ammonium nitrate, potassium nitrate and/or sodium nitrate. In particular, the weight ratio of the one or more nitrate compounds to the NPN composition in the ruminant feed composition ranges between 1:5 and 1:1, more in particular ranges between 1:4 and 2:3.

### Description of the figures

FIG. 1 shows a graph of the cumulative gas production of 6 different nitrogen-containing original products, in particular uncoated urea (A), coated urea (B), biuret (D), triuret (E), ammelide (F) and cyanuric acid (G), and a mixture according to the present disclosure (C) on an isonitrogenous base against a blank (H) during 72 hours of *in vitro* incubation.
FIG. 2 shows an overview of the reactions involved in the production of biuret from urea, including the formation of by-products.

### Detailed description

The present inventors have surprisingly found that a specific NPN composition for ruminants, comprising urea, biuret and one or more by-products of a urea condensation process or biuret production process, has many advantages when fed to a ruminant, in particular:
(1) the acetate to propionate ratio produced by the rumen microbes was decreased. The acetate and propionate content can be determined by gas chromatography determination of the volatile fatty acids (VFA) in a sample, as known by the skilled person;
(2) the efficiency of microbial protein synthesis (EMPS) was increased. As understood by the skilled person, the EMPS is a measure for how much microbial protein is produced due to the microbial activity for every unit of fermentable substrate which is fed to the ruminant. It may be determined by an *in vitro* assay in dual-flow continuous culture fermenters inoculated with undiluted ruminal fluid and fed with a ruminant feed composition to simulate rumen fermentation, as for instance explained in example 2;
(3) the dry matter (DM) and organic matter (OM) digestibility was increased. The DM and OM digestibility may be assessed by the difference in dry matter and organic matter (i.e. dry matter minus the ash content) of the feed vs the sample after fermentation, as known by the skilled person;
(4) the rumen fermentation was increased after 72h in an *in vitro* assay.

In this context, and without wishing to be bound by theory, it is believed that there has been a selective pressure on the microbes in the rumen that produce acetate and propionate in such a way that more propionate and less acetate, in view of ruminant feed supplement compositions without the mixture according to the present disclosure, are produced. Propionate is the most important glucogenic precursor in ruminants. This means that lowering the acetate to propionate ratio enhances the supply of energy for metabolic use, through which more energy is available to be used by the ruminant enhancing its production of proteins. In other words, the rumen fermentation has been made more efficient in an energetic way, supporting the production of meat, milk, etc.

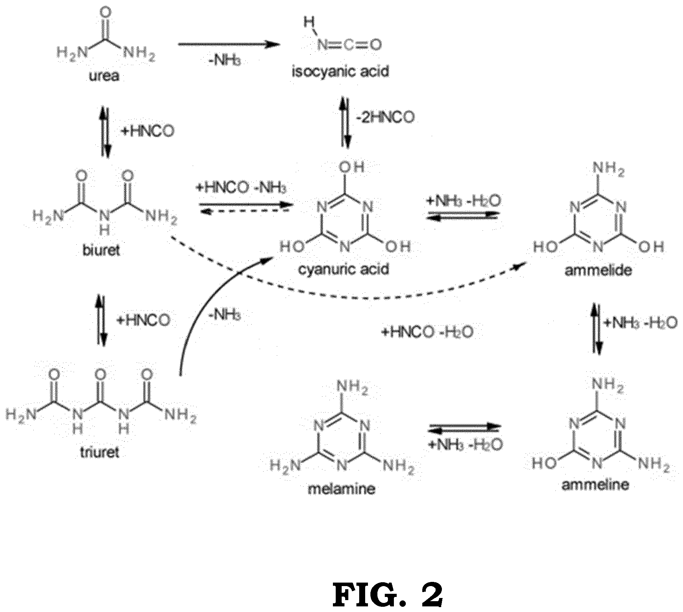

Biuret is typically formed through a non-catalytic thermal decomposition of urea. The main reaction and the side reactions in biuret production are known to the skilled person and they are represented in FIG. 2. When urea is heated to temperatures above its melting point, ammonia is slowly evolved. If the temperature range is limited slightly above the normal melting point of urea, i.e. 132 °C, biuret is formed. When heating the urea melt further, several other different "N-containing compounds" or "N-containing by-products" are formed in very small amounts - hence use of the term "minor". These N-containing compounds resulting out of the thermal decomposition of urea (also called the urea condensation process) encompass amongst others cyanuric acid, triuret, ammelide, etc. These compounds are referred to herein as "N-containing by-products of biuret production" or as "minor N-containing compounds". In particular embodiments, said N-containing by-products of biuret production comprise triuret, ammelide and cyanuric acid.

As used herein, the NPN composition or NPN mixture according to the present disclosure generally comprises urea, biuret and one or more by-products of a biuret production process. More in particular, the NPN composition or NPN mixture according to the present disclosure comprises between 60 wt.% and 95 wt.% of urea and biuret, and between 5 wt.% and 40 wt.% of N-containing by-products of a biuret production process, based on the total weight of the composition or mixture. Even more in particular, the NPN composition or NPN mixture according to the present disclosure comprises between 70 wt.% and 95 wt.% or between 75 wt.% and 95 wt.% of urea and biuret, and between 5 wt.% and 30 wt.% or between 5 wt.% and 25 wt.% of N-containing by-products of a biuret production process, based on the total weight of the composition or mixture.

In particular embodiments, the NPN composition or NPN mixture according to the present disclosure comprises between 30 and 60 wt.% of urea and between 30 and 60 wt.% of biuret, more in particular between 35 and 55 wt.% of urea and between 35 wt.% and 50 wt.% of biuret, even more in particular between 37 and 52 wt.% or between 40 and 50 wt.% of urea and between 39 and 46 wt.% or between 40 and 15 wt.% of biuret, based on the total weight of the composition or mixture. In certain embodiments, the NPN composition or NPN mixture according to the present disclosure further comprises between 5 wt.% and 30 wt.% of N-containing by-products of a biuret production process, in particular between 5 wt.% and 25 wt.% of N-containing by-products of a biuret production process, based on the total weight of the composition or mixture. In certain embodiments the N-containing by-products of a biuret production process comprises one or more of triuret, ammelide and cyanuric acid.

In certain embodiments, the NPN composition or NPN mixture according to the present disclosure comprises, as N-containing by-products of a biuret production process, (a) between 2.5 wt.% and 8 wt.% of triuret, more in particular between 3 and 6 wt.% of triuret; (b) between 0.1 and 5 wt.% of ammelide, more in particular between 0.5 and 3 wt.% of ammelide; and/or (c) between 2.5 and 15 wt.% of cyanuric acid, more in particular between 3 and 10 wt.% of cyanuric acid, based on the total weight of the composition or mixture.

In certain embodiments, the NPN composition or NPN mixture according to the present disclosure further comprises between 0.1 and 2 wt.% moisture (water), more in particular between 0.1 and 1.5 wt.% moisture, based on the total weight of the composition or mixture.

Particular embodiments of the NPN composition or NPN mixture according to the present disclosure comprise
- between 30 and 60 wt.% of urea, more in particular between 35 and 55 wt.% of urea, even more in particular between 37 and 52 wt.% of urea,
- between 30 and 60 wt.% of biuret, more in particular between 35 and 50 wt.% of biuret, even more in particular between 39 and 46 wt.% of biuret,
- between 3 and 6 wt.% of triuret,
- between 0.5 and 3 wt.% of ammelide,
- between 3 and 10 wt.% of cyanuric acid,
- between 0.1 and 1.5 wt.% of moisture, with wt.% based on the total weight of the composition.

An aspect of the present disclosure relates to the use of a NPN composition or NPN mixture according to the present disclosure, or stated differently a mixture of urea, biuret and minor N-containing compounds created during the urea condensation process to obtain the biuret, as a NPN-source in a ruminant feed supplement composition to
- decrease the acetate to propionate ratio produced by rumen microbes in a ruminant,
- improve the EMPS, and
- increase the DM and OM digestibility.

According to a related aspect of the present disclosure, a composition comprising urea, biuret and N-containing by-products created during the thermal decomposition of urea in the production of biuret, for use as an NPN-source in a ruminant feed supplement composition to decrease the ratio of acetate to propionate produced by rumen microbes in a ruminant is disclosed.

According to a further related aspect of the present disclosure, composition comprising urea, biuret and N-containing by-products created during the thermal decomposition of urea in the production of biuret, for use as an NPN-source in a ruminant feed supplement composition to improve the EMPS in a ruminant is disclosed.

According to a further related aspect of the present disclosure, a composition comprising urea, biuret and N-containing by-products created during the thermal decomposition of urea in the production of biuret, for use as an NPN-source in a ruminant feed supplement composition to increase the DM and OM digestibility in a ruminant.

According to a related aspect of the present disclosure, the present disclosure provides a process to decrease the acetate to propionate ratio produced by rumen microbes in a ruminant, comprising the steps of:
- preparing a ruminant feed composition comprising an NPN composition as envisaged herein as a NPN-source,
- feeding ruminants with the ruminant feed composition.

According to a further aspect of the present disclosure, the present disclosure provides a process to improve the EMPS in a ruminant, comprising the steps of
- preparing a ruminant feed composition comprising a NPN composition as envisaged herein as a NPN-source, and
- feeding ruminants with the ruminant feed composition.

According to a further related aspect of the present disclosure, the present disclosure relates to a process to increase the DM and OM digestibility in a ruminant, comprising the steps of
- preparing a ruminant feed composition comprising a NPN composition as envisaged herein as a NPN-source, and
- feeding ruminants with the ruminant feed composition.

In certain embodiments the acetate to propionate ratio produced by rumen microbes in a ruminant is decreased by at least 5%, in particular by at least 10%, even more in particular by at least 20%, when the NPN composition according to the present disclosure is administered to a ruminant as NPN source compared to a diet comprising urea as NPN source.

In certain embodiments, EMPS in a ruminant is increased by at least 5%, in particular by at least 10%, when the NPN composition according to the present disclosure is administered to a ruminant as NPN source compared to a diet comprising urea as NPN source.

In certain embodiments, the OM and DM digestibility in a ruminant is increased by at least 5%, when the NPN composition according to the present disclosure is administered to a ruminant as NPN source compared to a diet comprising urea as NPN source.

In certain embodiments, the method for decreasing the acetate to propionate ratio produced by rumen microbes in a ruminant, for improving the EMPS in a ruminant, for increasing the DM or OM digestibility in a ruminant further comprises the step of replacing a portion of vegetable proteins in the feed composition with the NPN composition according to the present disclosure.

As considered herein a ruminant is a bovine, ovine or caprine animal, particularly a domesticated animal. In particular embodiments, the ruminant is a sheep or a cattle, more in particular the ruminant is a beef cattle or dairy cattle.

The present disclosure further provides a feed, feed material, premix or feed additive for feeding a ruminant comprising the NPN composition as envisaged herein. The NPN composition according to the present disclosure may be combined with a ruminant feed or feed material, or with a premix for feeding a ruminant. In context of the present disclosure the term premix or nutrient premix is used as known to the person skilled in the art and denotes a mixture comprising one or more ingredients such as vitamins, trace minerals, medicaments, feed supplements and diluents. A ruminant feed or ruminant feed material generally refers to nutritional compositions suitable for feeding to ruminants, as known to the skilled person, and includes compound feeds (i.e. generally an industrially produced feed mixture of at least two feed materials), complete feeds (i.e. a compound feed containing all main nutrients needed for a daily ration, including also all the roughage needed by the ruminant), or a concentrate feed (i.e. a compound feed which has a high content of certain substances but which is sufficient for a daily ration only if used in combination with other feed).

Optionally, the NPN composition or NPN mixture according to the present disclosure can further be combined with other N-sources such as nitrate compounds, to obtain a nitrate enriched feed supplement or nitrate enriched NPN feed supplement. These nitrate compounds are more in particular water-soluble nitrate salts. Examples thereof are calcium nitrate, magnesium nitrate, ammonium nitrate, potassium nitrate, sodium nitrate, etc. The present disclosure thus also relates to a feed supplement composition or a nitrate enriched NPN feed supplement composition comprising the NPN composition according to the present disclosure and one or more nitrate compounds. In particular, the feed supplement composition or the nitrate enriched NPN feed supplement composition comprises (a) between 40 and 80 wt.%, more in particular between 50 and 70 wt.% or between 60 and 70 wt.% of the NPN composition according to the present disclosure and (b) between 20 and 40 wt.%, more in particular between 20 and 35 wt.% or between 25 and 30 wt.% of a water-soluble nitrate salt, particularly a water-soluble nitrate salt chosen from calcium nitrate, magnesium nitrate, ammonium nitrate, potassium nitrate and/or sodium nitrate., with wt.% based on the total weight of the feed supplement.

In particular embodiments, a ruminant feed composition comprising one or more nutritional ingredients and an NPN composition comprising (a) between 30 and 60 wt.% or between 35 and 55 wt.% of urea; (b) between 30 and 60 wt.% or between 35 and 50 wt.% of biuret; and (c) between 5 wt.% and 30 wt.% of N-containing by-products of the biuret production out of urea, based on the total weight of the NPN composition, is disclosed. More in particular, the NPN composition comprises (a) between 37 and 52 wt.% of urea; (b) between 39 and 46 wt.% of biuret; (c) between 3 wt.% and 6 wt.% of triuret; (d) between 0.5 and 3 wt.% of ammelide; and (e) between 3 and 10 wt.% of cyanuric acid, based on the total weight of the NPN composition. In certain embodiments, the one or more nutritional ingredients form a nutritionally balanced ration or a basal ration for a ruminant, as known by the skilled person.

In certain embodiments, a ruminant feed composition or feed material comprising between 0.5 and 4 wt.%, more in particular between 0.5 and 3.5 wt.% or between 0.5 and 3 wt.%, even more in particular between 1 and 2.5 wt.% of the NPN composition according to the present application, is disclosed, with wt.% based on the total dry matter of the feed composition or feed material,

The present disclosure further relates to a method for feeding or rearing a ruminant comprising administering the NPN composition according to the present disclosure to the ruminant, particularly during the feeding regime, and/or feeding the ruminant with the ruminant feed composition according to the present disclosure.

The disclosure as defined here above will now be illustrated and explained in more detail in the following experimental part, which is not intended to limit the scope of this disclosure anyway.

### Examples

### Example 1

Each NPN-source has specific characteristics, determining the release of N after entrance into the rumen. The efficiency of N-use by the rumen microbiota will however depend on the amount and the release rate of the NPN-source. This may result in a difference in the efficiency of microbial protein production in the rumen. In this example, the N-utilization *in vitro* of 3 different NPN-products and the mixture according to the present disclosure compared to coated and uncoated urea as NPN-sources for rumen fermentation was assessed.

### Test materials

A total of 6 different NPN-products and a mixture according to the present disclosure were selected to be tested in an *in vitro* rumen fermentation model (see Table 1) below. The mixture according to the present disclosure generally comprises between 37 and 52 wt.% of urea, between 39 and 46 wt.% of biuret, between 3 and 6 wt.% of triuret, between 0.5 and 3 wt.% of ammelide, between 3 and 10 wt.% of cyanuric acid, and between 0.1 and 1.5 wt.% of moisture, based on the total weight of the mixture.

**Table 1: Overview of tested products, their supplier, physical form, purity and nitrogen content**

| Product | Supplied by | Physical form | Purity (%) | Nitrogen content (%) |
|---|---|---|---|---|
| Uncoated urea | Yara | Pearls | 99 | 46.2 |
| Urea | Yara | Pearls | 89 | 41.5 |
| Biuret | Alfa Aesar | Powder | 97 | 39.5 |
| Cyanuric acid | Yara | Powder | 100 | 32.6 |
| Triuret | Enamine | Powder | 95 | 36.4 |
| Ammelide | Dr. Ehrenstorfer | Powder | 99 | 43.3 |
| Mixture according to the present disclosure | Applicant | Powder | 100 | 41.0 |

### In vitro protocol

The in vitro model used to simulate rumen digestion and utilization of the products is the Gas Production Test protocol, adapted for protein digestibility, as described in more detail in the following paragraph.
Approximately 1 liter of rumen fluid was collected from two different rumen-fistulated animals in the morning. Rumen fluid was strained through a cheesecloth, kept at 39°C under CO₂ and then diluted 1:19 with a nitrogen-free buffer and mineral solution containing 10.03 g NaHCO₃, 1.43 g Na₂HPO₄, 1.55 g KH₂PO₄, 0.15 g MgSO₄.7H₂O, 0.52 g Na₂S, 0.017 g CaCl₂.2H₂O, 0.015 g MnCl₂.4H₂O, 0.002 g CoCl₃.6H₂O, 0.012 g FeCl₃.6H₂O and 0.125 mg resazurin per liter.
To ensure the rumen fluid was depleted of free nitrogen and to ensure nitrogen would be the limiting factor for the microbial growth at the start of the experiment, the buffered rumen fluid was pre-incubated for 4 hours at 39°C with a carbohydrate overload of glucose, xylose and soluble starch, each at 3.33 g/l. During this pre-incubation, all nitrogen available in the rumen fluid would be incorporated into bacterial protein and other bacterial nitrogen-containing components.
Each product was weighed into different glass bottles on an isonitrogenous base, providing 15 mg N per flask. Then, 60 ml of the pre-incubated buffered rumen fluid was added, under continuous flushing with CO₂. Flasks were closed with rubber stoppers and placed in a shaking water bath with 50 movements per minute at 39 °C to start the incubation period. The gas production of each flask was recorded continuously for 72 hours using a fully automated system. All test products including a blank (i.e. no product added to the flask of rumen fluid) were tested in one run in triplicate.

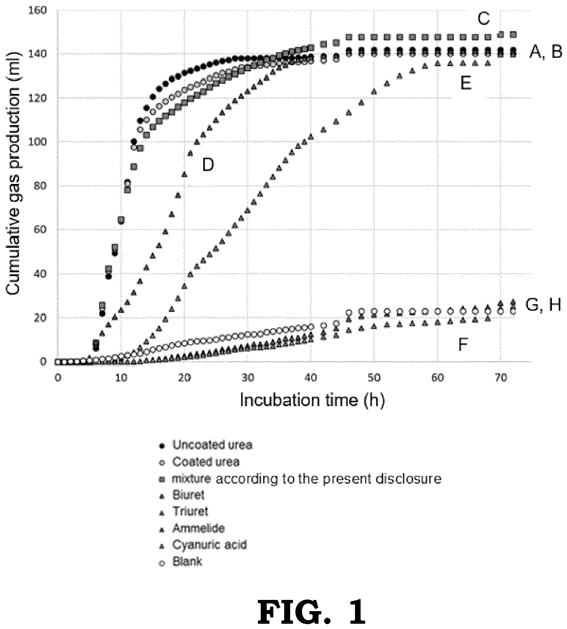

The cumulative gas production was measured continuously for 72 hours. The results averaged per triplicate are shown in Figure 1.

### Results

As can be seen in Figure 1, the accumulated gas production curves of ammelide and cyanuric acid were comparable to the blank sample. In general, the products are relatively low soluble in water compared to the other tested products. Moreover, the nitrogen in these products is incorporated in a ring structure which is less accessible. The nitrogen solubility of ammelide and cyanuric acid appeared to be too low to support bacterial growth. For ammelide, cyanuric acid as well as the blank, the gas production is however not equal to zero since microbial turnover release small amounts of nitrogen into the solution which can be used by the remaining microorganisms. The cumulative gas production after 72 hours was not significantly different between the blank, ammelide and cyanuric acid.

As can furthermore be seen in Figure 1, the cumulative gas production profiles of the uncoated urea and the coated urea showed a lag period of approximately 5 hours, after which the cumulative gas production rapidly increased to a maximum of 17 ml/hour for the uncoated urea and 19 ml/hour for the coated urea. After approximately 15 hours of incubation, the cumulative gas production slowed down rapidly and stopped after 30 hours. The solubility of urea in water has been shown to be very quick, within minutes. The longer lag time of 5 hours for urea products can be explained from the effect of the fast release of ammonia on the pre-incubated buffered rumen fluid, preventing the release of CO₂ from the fluid. Coated urea was expected to have a slower nitrogen release rate than uncoated urea, which did not result in a difference in cumulative gas production over the 72 hours of incubation. The cumulative gas production of the uncoated urea was numerically lower than the coated urea between 10 and 20 hours of incubation, which may be related to the slower release of the nitrogen from the coated urea. Biuret and triuret showed a cumulative gas production curve below the coated and uncoated urea. Biuret had a comparable lag time of 5 hours, but a slower gas production rate in the first 15 hours of incubation. The cumulative gas production was the highest in the period of between 15 and 25 hours of incubation, and slowed down afterwards until the maximum cumulative gas production was reached after 40 hours. Triuret showed a longer lag time of 9 hours, suggesting a slower release of nitrogen which was expected based on the characteristics of triuret relative to biuret which is less soluble. After 9 hours, the gas production rate started relatively slowly, peaking at 20 hours of incubation. The cumulative gas production was rather stable at a low level of approximately 4 ml/hour from 20 to 50 hours and decreased afterwards until the end level was reached after 60 hours.

As further can be seen in Figure 1, the cumulative gas production of the mixture according to the present disclosure was higher in comparison with coated urea during the 72 hours of incubation. In the period between 20 and 40 hours of incubation, the cumulative gas production for the mixture according to the present disclosure remained lower than the cumulative gas production of coated urea, which is likely related to the slower release of N from the biuret and other NPN compounds present in this mixture. Nevertheless, the cumulative gas production from the mixture according to the present disclosure kept increasing after 40 h, obtaining the greatest cumulative gas production amongst all the NPN sources tested.

### Conclusion

The rapid ammonia release rate of uncoated urea limits the amount of urea that may be used in a ruminant diet formulation. High inclusion levels of uncoated urea in a ruminant diet formulation will increase the ammonia concentration in the rumen rapidly, leading to ruminal accumulation and absorption of ammonia and subsequent excretion of urea in the urine.

As expected, the pure N-compounds, i.e. ammelide, triuret and cyanuric acid, which are well-known N-containing by-products of the biuret production by thermal decomposition of urea and which are also present in minor amounts in the mixture according to the present disclosure, generated a much lower cumulated gas production than uncoated and coated urea. Ammelide and cyanuric seem not to be suitable as rumen digestible nitrogen sources in dairy cattle nutrition. Their solubility and nitrogen release rate are too slow to support microbial growth. Nitrogen from biuret and triuret can be used by rumen bacteria, but it is released more slowly than coated or uncoated urea. The slow release of nitrogen from triuret and biuret may improve nitrogen utilization. However, it can be expected to escape from the rumen approximately 12 to 24 hours after ingestion (depending on the diet characteristics such as digestibility and particle size). Part of the biuret and triuret (approximately 60%) will still be unused by the rumen microbes after 24 hours, based on the cumulative gas production profiles. This amount of unused nitrogen is likely to pass the rumen and be excreted after passage through the gastrointestinal tract.

The proportion of urea, biuret and the minor N-compounds created by the production of biuret starting from urea generated an unexpected fermentation pattern as shown by the cumulative gas production dynamics, reaching the greatest total gas production amongst all the NPN sources assessed. As can be seen in Figure 1, in the beginning, the slope of the cumulative gas production curve is less steep in comparison with the one of urea and uncoated urea, but afterwards, the cumulative gas production is the highest of all tested products. The more cumulative gas is produced, the better, since this means that rumen fermentation is maximized.

### Example 2

In this example, a dual-flow continuous culture fermenters *in vitro* assay was performed aiming to simulate rumen fermentation.

### Fermenters

Eight 1320 ml dual-flow continuous culture fermenters were used in two replicated periods. Each period consisted out of 5 days for adaptation of the ruminal fluid to the treatments and 3 days for sampling. On the first day of each period, all fermenters were inoculated with undiluted ruminal fluid filtered through two layers of cheesecloth to remove the feed particles. The fermentation conditions were constant, i.e.
- a temperature of 39 °C,
- a pH of 6.4 ± 0.05 by infusion of 3 N HCl or 5 N NaOH,
- anaerobiosis with continued infusion of N₂ gas at a rate of 40 ml/min, and
- continued infusion of artificial saliva to obtain liquid and solid dilution rates of 10 %/h and 5 %/h, respectively.
The fermenters were fed 95 grams/day of dry matter of a diet formulated to meet or exceed current nutrients recommendations for lactating dairy cows, i.e.
- 166 g/kg crude protein (CP),
- 323 g/kg neutral detergent fiber (NDF), and
- 201 g/kg acid detergent fiber (ADF),
And were fed in three daily administrations, i.e. at 7, 15 and 23 o'clock with a forage : concentrate diet in a range of 53 : 47.

### Animals and treatment diets

Ruminal fluid was taken from two Holstein dairy cows fitted with ruminal cannulas fed with a 60 : 40 forage : concentrate diet with alfalfa and cracked grain (11 kg dry matter/cow/day). The afternoon before the ruminal extraction, the ruminant animals were not fed.

The NPN-dietary treatments were as follows:
- Control: basal diet to which 0.51 wt.% urea was added, with wt.% on dry matter basis,
- Diet: basal diet to which 0.55 wt.% of the mixture according to the present disclosure, with composition as in example 1, was added, with wt.% on dry matter basis.
To obtain isoenergetic and isonitrogenous diets using different NPN sources, a nitrogen content determination using the Kjeldahl method was used to determine the nitrogen content of each NPN product (see Table 2 below).

**Table 2: Nitrogen content of non-protein nitrogen sources**

| Experimental example | N wt.% |
|---|---|
| Control | 44.37 |
| Diet | 40.94 |

Due to the N-percentage differences among the products, the inclusion level of each NPN-source was different (see Table 3 below).

**Table 3. Ingredient composition of the dietary treatments**

| Ingredient (wt.% of dry matter) | NPN dietary treatment | |
|---|---|---|
| | Control | D1 |
| Corn grain, craked dry | 40.6 | 40.6 |
| Legume hay < 40 wt.% NDF | 26.7 | 26.7 |
| Grass, hay, mature | 26.3 | 26.3 |
| Soybean meal, 48 wt.% CP | 4.61 | 4.61 |
| Urea | 0.51 | - |
| Mixture according to the present disclosure (see ex. 1) | - | 0.55 |
| Calcium carbonate (CaCO₃) | 0.46 | 0.46 |

### Sample collection

On the second day of sampling, 4 ml of filtered fermenter fluid was taken 2 hours after the morning feeding to determine VFA-concentrations.

During sampling days, the collection vessels were maintained at 4 °C to prevent microbial activity. Solid and liquid effluents from 3 sampling days were composited and mixed within the fermenter and homogenized. Subsamples were taken for the analyses of the volatile fatty acids (VFA). The remainder of the sample was lyophilized (freeze drying) and the dry samples were analyzed for DM, ash, N and purines to calculate bacterial nitrogen and organic matter content (OM).

Bacterial cells were obtained from the fermenter flasks the last day of each experimental period. Solid and liquid associated bacteria were isolated using a combination several detachment procedures selected to obtain the maximum detachment without affecting the cell integrity. The bacterial cells were lyophilized and the dry samples were analyzed for dry matter (DM), ash, N and purines to calculate bacterial nitrogen.

### Chemical analyses

Effluent DM was determined by lyophilizing 300 ml aliquots in triplicate. The DM content of the diets and bacterial samples were determined by drying samples for 24 hours in an 103 °C forced air oven (see AOAC, 1990; method 950.01).

Dry samples of diets, effluents and bacteria were ashed overnight at 550 °C in a muffle furnace (see AOAC, 1990, method 976.05) and OM was determined by difference. Total N of diets, effluents and bacterial samples were determined by a Kjeldhal method (AOAC, 1990; method 976.05). Sample crude protein (CP) was calculated as N×6.25. Effluent CP was determined in liquid samples. Crude protein degradation was calculated as the difference between CP in the diet minus CP in the effluent and expressed as wt.% of DM. The EMPS was determined by dividing bacterial N by fermented organic matter.

The fiber components of the diets and the effluents were analyzed sequentially using a thermostable alpha-amylase and sodium sulfite and expressed without residual ash.

The samples for the VFA-analysis were prepared as described by Jouany, J. P., and J. Senaud. "Influence des ciliés du rumen sur la digestion de différents glucides chez le mouton. I.-Utilisation des glucides pariétaux (cellulose et hemicelluloses) et de l'amidon." Reproduction Nutrition Développement 22.5 (1982): 735-752. and analyzed by gaschromatography.

### Results

In Table 4 below, the effect of the NPN-diets on the nitrogen metabolism of ruminal microorganisms, true digestibility of DM and OM, CP degradation, the EMPS in the rumen (or in other words, how much microbial protein is produced due to the microbial activity for every unit of substrate which is fed to the ruminant), in the control diet ("Control") and a diet ("Diet") comprising a mixture according to the present disclosure is shown.

**Table 4: Effect of NPN dietary treatment on the nitrogen metabolism of ruminal microorganisms**

| | NPN dietary treatment | |
|---|---|---|
| | Control | Diet |
| True digestibility, wt.% of DM | 53.53 | 56.79 |
| DM | | |
| OM | 52.95 | 55.90 |
| CP degradation (% of dry matter) | 47.7 | 53.2 |
| EMPS (g bacterial N/kg of fermented organic matter) | 35.7 | 39.4 |
| VFA | 62.92 | 60.06 |
| Acetate | | |
| Propionate | 18.18 | 23.29 |
| Acetate to propionate ratio | 3.5 | 2.76 |

### Conclusion

Out of Table 4, it can be concluded that the diet comprising a mixture of urea, biuret and the minor amount of N-containing compounds originating from the biuret production out of urea according to the present disclosure have
- a higher true digestibility of DM and OM, with an increase in digestibility of about 5% compared to a diet comprising urea as NPN source,
- an increase of the EMPS, meaning that the rumen microbiota maximized N-utilization, with an increase of EMPS of about 10% compared to a diet comprising urea as NPN source, and
- an increased amount of propionate and a decreased amount of acetate, through which acetate to propionate ratio is decreased, suggesting that this NPN-mixture according to the present disclosure improves the efficiency of the ruminal energy utilization, with a decrease in acetate to propionate ratio of about 20% compared to a diet comprising urea as a NPN source.

## Claims

1. Use of a composition comprising biuret, urea and N-containing by-products of the biuret production out of urea as a NPN-source in a ruminant feed supplement composition to decrease the acetate to propionate ratio produced by rumen microbes in a ruminant.

2. Use of a composition comprising biuret, urea and N-containing by-product of the biuret production out of urea as a NPN-source in a ruminant feed supplement composition to improve the efficiency of microbial protein synthesis (EMPS).

3. Use of a composition comprising biuret, urea and N-containing by-products of the biuret production out of urea as a NPN-source in a ruminant feed supplement composition to increase the dry matter (DM) and organic matter (OM) digestibility.

4. Use according to any one of claims 1 to 3, wherein the composition comprises between 30 and 60 wt.% of urea and between 30 and 60 wt.% biuret, particularly between 35 and 55 wt.% of urea and between 35 and 50 wt.% of biuret, based on the total weight of the composition.

5. Use according to claim 4, wherein the composition comprises between 37 and 52 wt.% of urea and between 39 and 46 wt.% of biuret, based on the total weight of the composition.

6. Use according to any one of the preceding claims, wherein the composition further comprises
- between 3 and 6 wt.% of triuret, and/or
- between 0.5 and 3 wt.% of ammelide, and/or
- between 3 and 10 wt.% of cyanuric acid, and
- between 0.1 and 1.5 wt.% of moisture.

7. Ruminant feed composition comprising one or more nutritional ingredients and an NPN composition, wherein the NPN composition comprises (a) between 35 and 55 wt.% of urea; (b) between 35 and 50 wt.% of biuret; and (c) between 5 wt.% and 30 wt.% of N-containing by-products of the biuret production out of urea, based on the total weight of the NPN composition, particularly wherein the N-containing by-products are triuret, ammelide and/or cyarunic acid.

8. Ruminant feed composition according to claim 7, wherein the NPN composition comprises (a) between 37 and 52 wt.% of urea; (b) between 39 and 46 wt.% of biuret; (c) between 3 wt.% and 6 wt.% of triuret; (d) between 0.5 and 3 wt.% of ammelide; and (e) between 3 and 10 wt.% of cyanuric acid, based on the total weight of the NPN composition.

9. Ruminant feed composition according to claim 7 or claim 8, further comprising one or more nitrate compounds, particularly a water-soluble nitrate salt, more in particular a water-soluble salt chosen from calcium nitrate, magnesium nitrate, ammonium nitrate, potassium nitrate and/or sodium nitrate.

10. Ruminant feed composition according to claim 9, wherein the weight ratio of the one or more nitrate compounds to the NPN composition in the feed composition ranges between 1:5 and 1:1, more in particular ranges between 1:4 and 2:3.

11. Ruminant feed composition according to any one of claims 7 to 10, wherein the one or more nutritional ingredients form a nutritionally balanced ration or a basal ration for a ruminant.
